# FASCICULE DE BREVET EUROPEEN

(11) **EP 1 461 195 B1**
(45) Date de publication et mention de la délivrance du brevet: **24.06.2009**
(21) Numéro de dépôt: 02799837.6
(22) Date de dépôt: 20.12.2002
(51) Int. Cl.: B29C 45/14, B29C 70/08

(54) **COMPLEXE FIBREUX A FACE DECOREE POUR LA REALISATION DE PIECES COMPOSITES ET PIECES COMPOSITES EN FAISANT APPLICATION**
FASERVERBUNDMATERIAL MIT DEKORIERTER OBERFLÄCHE FÜR DIE HERSTELLUNG VON VERBUNDBAUTEILEN
TEXTILE COMPLEX WITH DECORATED SURFACE FOR PRODUCING COMPOSITE PARTS AND COMPOSITE PARTS USING SAME

(30) Priorité: 31.12.2001 FR 0117093
(43) Date de publication de la demande: 29.09.2004
(73) Titulaire: CHOMARAT COMPOSITES, 75002 Paris (FR)
(72) Inventeur: COSTE, Dominique, F-07160 Le Cheylard (FR); CHIRAT, David, F-74160 Saint Julien en Genevois (FR)
(74) Mandataire: Sarlin, Laure V.
(86) Numéro de dépôt international: PCT/FR2002/004486
(87) Numéro de publication internationale: WO 2003/060217

(56) Documents cités:
- EP-A- 0 333 602
- EP-A- 0 694 643
- EP-A- 0 703 307
- EP-A- 0 873 865
- EP-A- 1 238 794
- WO-A-98/53990
- WO-A-98/53991
- FR-A- 2 646 442

## Description

La présente invention est relative au domaine technique de la production de pièces composites conformées ou non qui peuvent être utilisées directement ou en tant que telles ou être associées à d'autres éléments constitutifs pour former des structures, notamment de type en corps creux ouverts ou fermés qui sont recherchées dans de très nombreuses applications.

De manière à pouvoir obtenir des pièces composites alliant une légèreté certaine à une résistance mécanique convenable, il a été proposé, par la technique antérieure, de mettre en oeuvre au moins une armature de renfort, généralement du type textile ou assimilé, alliée à une matrice de résine, le plus souvent de type thermodurcissable dans laquelle ladite armature est noyée pour être présente soit à coeur de l'épaisseur de la pièce constituée soit en surface.

Il peut être estimé que ces techniques bien maîtrisées donnent satisfaction. Dans les cas où il est souhaité disposer de renforts de forte épaisseur comme cela est recherché dans certaines applications, comme par exemple des pièces planes ou en forme telles que des éléments de carrosserie, de bateaux de plaisance, de citernes, voire d'aéronefs. Il a même été proposé des armatures textiles telles que celles enseignées par le brevet FR 2 646 442 ou encore par le brevet FR 2 734 847.

Il peut être considéré que les armatures textiles de renforcement donnent amplement satisfaction dans la plupart des applications.

Il s'avère toutefois qu'une tendance récente propose de faire assumer à l'armature, simultanément, une fonction de décoration lorsqu'elle est située dans l'épaisseur de la pièce définitive mais de telle sorte que l'une des faces au moins de ladite armature soit apparente.

A titre d'exemple, des pièces susceptibles de répondre à une telle demande concernent, une fois encore, les éléments de carrosserie mais aussi et non limitativement des panneaux de construction, voire des panneaux d'isolation dans des locaux divers.

On conçoit que la fonction décorative peut être attachée à la structure même de l'armature de renfort textile ou à un motif décoratif que l'une au moins des faces de cette armature présente.

Faire assumer une double fonction à une telle armature de renfort pose toutefois le problème de garantir l'intégrité dé l'aspect décoratif souhaité, même après la réalisation de la pièce composite par injection de la matrice de résine thermodurcissable dans laquelle l'armature doit être noyée pour partie au moins.

L'objet de l'invention est de répondre à cette exigence en proposant des perfectionnements aux armatures textiles, de telle manière que de telles armatures puissent répondre à une fonction seconde de décoration de l'une au moins des faces d'une pièce composite définitive obtenue par injection d'une résine en association avec ladite armature et de telle manière que cette injection n'ait pas pour conséquence d'altérer la qualité de l'aspect décoratif recherché et / ou la qualité d'état de surface de la pièce composite définitive obtenue.

Pour atteindre ces objectifs, le complexe fibreux à face décorée pour la réalisation de pièces composites moulées à base de résine thermodurcissable injectée, conforme à l'invention, est caractérisé en ce que, étant du type comprenant au moins une nappe de fibres, il comprend, en outre, en relation avec l'une au moins des faces de la nappe, un ensemble lié à ladite face et assumant une première fonction de décor et une seconde fonction de barrière destinée à s'opposer à la migration de la résine thermodurcissable injectée, dans le sens nappe-ensemble.

L'invention a encore pour objet une pièce composite obtenue à partir d'un complexe fibreux selon l'invention allié à une matrice de résine thermodurcissable dans laquelle ladite nappe est, en partie au moins, noyée.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.
La **fig. 1** est une perspective, en partie arrachée, illustrant une première forme de réalisation du complexe fibreux conforme à l'invention.
Les **fig. 2 à 5** sont des coupes-élévations transversales partielles, à plus grande échelle, illustrant différentes réalisations de l'objet de l'invention.
La **fig. 6** est une coupe partielle, à échelle différente, d'une pièce composite obtenue à partir du complexe fibreux selon l'invention et mettant en évidence une caractéristique d'un tel complexe.

L'invention est relative à un complexe fibreux spécifiquement à face décorée pour la réalisation de pièces composites moulées ou non à partir d'une résine thermodurcissable injectée, de telle sorte que ce complexe fibreux constitue une armature de renfort de type textile, noyée pour partie au moins dans la matrice de résine thermodurcissable.

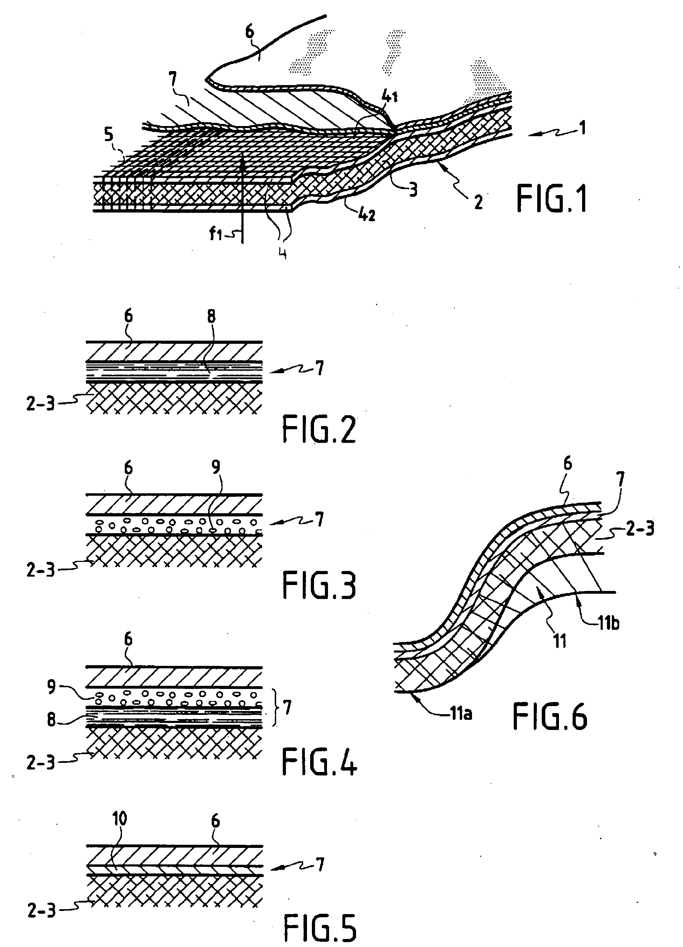

Dans le cas où un tel complexe doit simultanément assumer une fonction décorative lorsqu'il se situe de telle manière que l'une de ces faces au moins correspond à une face extérieure de la pièce composite, que cette armature de renfort soit ou non de forte épaisseur, le complexe fibreux selon l'invention se présente dans une forme de réalisation, comme cela est illustré par la **fig.1****.**

Un tel complexe, désigné dans son ensemble par la référence 1, comprend une partie **2** à fonction essentielle d'armature de renfort qui est caractérisée par une épaisseur relative notable qu'elle présente. Il doit être rappelé que l'invention s'applique tout autant aux armatures de renfort qui sont de faible épaisseur et, en conséquence, la forme de réalisation selon la **fig. 1** n'est formée qu'à titre d'exemple.

Dans cet exemple la partie **2** est constituée essentiellement par une nappe **3** à base de fibres appropriées.

Préférentiellement mais non limitativement, de telles fibres ont subi un traitement de frisure pour conférer à la nappe **3** des caractéristiques de légèreté et d'épaisseur ainsi qu'une texture aérée.

Dans un exemple, la nappe **3** peut être constituée à base de fibres de polyester possédant un titre au moins égal à 30 decitex, une longueur de coupe comprise entre 40 et 110 mm et qui ont reçu préalablement à leur mise en forme sous nappe, un traitement de texturation leur conférant une frisure permanente.

La nappe **3** peut aussi, mais de façon non obligatoire, être avantageusement associée à au moins une couche textile de renfort telle que **4,** de préférence à deux couches rapportées sur les deux faces de la nappe épaisse **3,** telles que **4₁** et **4₂.**

Les couches de renfort **4** peuvent être avantageusement à base de nappes fibreuses telles que des nappes de fibres de verre, des nappes unies ou bidirectionnelles ou encore-des fils jointifs ou contigus ou espacés, réalisés en verre, en carbone ou en aramide.

La cohésion de la partie **2** dans une telle hypothèse est généralement assurée par liaison entre les couches **4₁** et **4₂** et l'âme **3,** notamment par couture-tricotage **5** ou par aiguilletage le cas échéant.

Il doit être retenu que la partie **2** peut aussi être constituée par une pluralité d'âmes **3** et de couches **4** et que dans la plupart des cas, cette partie **2** présente une capacité de déformabilité et de souplesse la rendant apte à épouser des conformations variées.

Pour conclure, l'armature **2** peut aussi être simplement constituée par une couche renfort textile ou non, comme par exemple une grille à base de fils ou de mèches de fibres.

Une armature de renfort selon l'un des types ci-dessus comprend, sur l'une au moins de ces faces, au sens de l'invention, un ensemble lié à ladite face qui est destiné à assumer une première fonction de décor et une seconde fonction de barrière dans le sens partie **2**-ensemble, de telle manière que l'injection ultérieure de la matrice de résine thermodurcissable n'ait pas pour conséquence préjudiciable une altération de la fonction décor.

C'est-à-dire que la seconde fonction de l'ensemble est de s'opposer à la migration d'une résine thermodurcissable qui serait injectée en relation avec l'armature **2.** L'ensemble constitue donc une barrière physique étanche à une telle résine dans son état liquide ou pâteux avant polymérisation et permet d'éviter que cette dernière n'atteigne le décor situé en surface du complexe fibreux.

Dans une première variante de réalisation, l'ensemble peut être mono-couche en étant constitué, par exemple, par un film à caractère étanche à la résine et comportant, en surface ou dans sa masse, un décor.

Dans une autre variante, l'ensemble comprend un revêtement décoratif **6** qui peut être décoratif par lui-même, par apport de pigments colorés ou encore par présentation de motifs décoratifs rapportés. Le revêtement **6,** de préférence à caractère souple et déformable, peut être formé par une nappe de fibres pour partie au moins liées, par un textile, par un non-tissé, par un tricot ou encore par un film continu de matière themoplastique.

La fonction décor peut être assumée aussi, dans les deux variantes, par un support enduit ou, encore, par un film, une feuille ou analogue, produit par extrusion d'une matière thermoplastique à base polyoléfine, granulée. Il doit être considéré au sens de l'invention que le revêtement décoratif **6** revêt tout ou partie de la surface de l'armature **2**, de manière à être rendu apparent sur la surface correspondante de la pièce composite devant être réalisée.

Selon la seconde variante, le complexe fibreux comporte, entre l'armature **2** et le revêtement **6**, une couche intermédiaire **7** souple et déformable qui est liée, de préférence pour éviter tout risque de délaminage, à la fois à l'armature **2** et au revêtement **6** par tous moyens appropriés excluant toutefois une liaison par couture-tricotage.

La couche intermédiaire **7** est choisie de manière à assumer tout d'abord une fonction d'accrochage avec l'armature **2** puis, de manière essentielle, une fonction de barrière s'opposant à toute migration dans le sens de la flèche **f₁** d'une résine thermodurcissable qui serait injectée en relation avec l'armature **2** qui en assure le renfort.

A cette fin, la couche intermédiaire **7** peut être constituée, dans un exemple selon la **fig. 2****,** par un non-tissé qui, dans un tel cas répond, à une porosité résiduelle compatible avec la nature de la résine injectée et sa viscosité, de telle manière qu'il constitue une barrière s'opposant à la migration de cette dernière dans son état liquide ou pâteux avant polymérisation.

Un tel non-tissé est avantageusement à base de fibres de polyéthylène de 1,7 à 6,7 décitex déposées à raison de 50 g/m².

La couche intermédiaire **7** est également choisie de manière à assumer éventuellement une troisième fonction qui est celle de lissage de la couche sous-jacente de l'armature **2,** de manière à absorber et à faire disparaître les variations d'état de surface que peut présenter, soit la nappe **3,** soit la couche de renfort textile, telle que **4.**

De cette manière, les défauts de surface inhérents à la structure même de l'armature **2** sont masqués de telle sorte que le revêtement décoratif **6** peut présenter un état de surface lisse et régulier contribuant à améliorer sinon à produire l'aspect esthétique recherché.

Dans l'exemple de la **fig. 2****,** les fibres constitutives du non-tissé **7** peuvent répondre à un titre compris entre 1,7 et 17 décitex et posséder une longueur élémentaire comprise entre 10 et 100 mm.

La **fig. 3** montre une variante de réalisation dans laquelle la couche intermédiaire est constituée par une épaisseur de mousse **9** choisie parmi les matières suivantes : polyuréthane, polypropylène, polyéthylène, etc..

Dans tous les cas, la mousse **9** répond à une caractéristique de cellules ou alvéoles fermées de manière à assumer la fonction de barrière telle qu'énoncée précédemment.

L'épaisseur de mousse peut être comprise entre 1 et 20 mm.

Dans certains cas, la couche de mousse peut être hétérogène en présentant par exemple une épaisseur à cellules ou alvéoles fermées orientée vers le revêtement 6 et une épaisseur à cellules ouvertes orientée vers l'armature **2,** de telle manière aussi que la couche de mousse constitue alors l'ensemble à double fonction.

La **fig. 4** montre une variante dans laquelle la couche intermédiaire **7** est constituée par l'association d'un non-tissé **8** et d'une épaisseur de mousse **9** qui sont liés ensemble soit par apport d'un produit intermédiaire adhésif, soit encore par résultat de fabrication lorsque par exemple la mousse **9** est développée directement sur le non-tissé **8** ou est liée à ce dernier par flamage notamment.

Il est généralement choisi de disposer la couche intermédiaire **7,** dans l'exemple de réalisation selon la **fig. 4****,** de telle manière que le non-tissé **8** soit placé en relation de surface avec l'armature **2,** soit directement en contact avec la nappe **3,** soit avec la couche textile de renfort **4₁** ou **4₂.**

La **fig. 5** montre une autre forme de réalisation dans laquelle la couche intermédiaire **7** est constituée par un produit adhésif **10** qui est, par exemple, déposé sous la forme d'un film rapporté ou constitué in situ. Dans un tel cas, le produit adhésif est avantageusement choisi à base de EVA, PE, PET simple ou coextrudé.

Le produit adhésif peut, dans une variante de réalisation, être obtenu in situ à partir d'un dépôt de produit pulvérulent soumis au moins temporairement à une montée en température suffisante pour provoquer la fusion des particules élémentaires qui se constituent alors sous la forme d'un film. Dans un tel cas, il peut être utilisé l'un des produits suivants, poudre, PET, EVA, réputé commercialisé et ne faisant pas partie directement de l'objet de l'invention.

Comme énoncé ci-dessus, le complexe fibreux selon l'invention a vocation à constituer une armature de renforcement pour une pièce composite qui est obtenue non nécessairement par moulage et conformation mais principalement par injection d'une résine thermodurcissable telle que **11** qui est injectée en relation avec l'armature **2** de manière à constituer une matrice pour les fibres de cette dernière qui est incorporée à l'intérieur de l'épaisseur de paroi en résine.

Dans l'objectif selon l'invention, l'armature doit être disposée de telle manière que le revêtement décoratif **6** soit apparent et la **fig. 6** met en évidence que, dans le cas d'une armature **2** épaisse et par exemple du type selon la **fig. 1****,** l'injection de la résine **11** est effectuée en relation avec l'armature **2,** de telle manière que la paroi de la pièce composite obtenue soit au moins égale à l'épaisseur de l'armature **2** comme illustré en **11a** ou excédentaire par rapport à cette dernière comme montré en **11b.** La **fig. 6** met aussi en évidence que la migration de la résine thermodurcissable injectée est empêchée dans le sens armature **2**/revêtement **6** par l'intermédiaire de la couche intermédiaire **7** qui constitue une barrière confinant la migration de la résine injectée de telle manière que celle-ci n'ait en aucun cas la possibilité d'atteindre le revêtement décoratif 6 et d'en altérer la composition ou la présentation.

Les moyens décrits ci-dessus permettent d'atteindre le premier objectif posé ainsi que celui concernant la fonction de lissage des irrégularités de surface présentées par la partie **2** constitutive de l'armature **1.**

L'invention n'est pas limitée aux exemples décrits et représentés car diverses modifications peuvent y être apportées sans sortir de son cadre, notamment comme décrit dans les revendications suivantes.

## Revendications

1. Complexe fibreux **(1)** à face décorée pour la réalisation de pièces composites moulées à base de résine thermodurcissable injectée, du type comprenant au moins une nappe à base de fibres **(3),**
**caractérisé en ce qu'**il comprend, en outre, en relation avec l'une des faces de la nappe (3) un ensemble lié à ladite face et assumant une première fonction de décor et une seconde fonction de barrière destinée à s'opposer à la migration de la résine thermodurcissable injectée, dans le sens nappe-ensemble.

2. Complexe fibreux **(1)** selon la revendication 1, **caractérisé en ce que** l'ensemble est mono-couche.

3. Complexe fibreux **(1)** selon la revendication 1, **caractérisé en ce que** l'ensemble est bi-couche.

4. Complexe fibreux **(1)** selon la revendication 3, **caractérisé en ce que** l'ensemble bi-couche comprend un revêtement de décoration **(6)** et une couche intermédiaire **(7)** liée au revêtement et à la nappe et assumant au moins une fonction de barrière dans le sens nappe-revêtement.

5. Complexe fibreux **(1)** selon la revendication 4, **caractérisé en ce que** la couche intermédiaire **(7)** assume une fonction de lissage de l'état de surface de la nappe.

6. Complexe fibreux **(1)** selon la revendication 1, **caractérisé en ce que** le revêtement de décoration **(6)** est choisi parmi les produits suivants : fibres continues de matière thermoplastique, nappe de fibres pour partie au moins liées, textile, non-tissé, tricot, support enduit, film extrudé.

7. Complexe fibreux **(1)** selon la revendication 4 ou 5, **caractérisé en ce que** la couche intermédiaire **(7)** est constituée par un non tissé dont la porosité est choisie en fonction de la nature et de la viscosité de la résine à l'état d'injection.

8. Complexe fibreux **(1)** selon la revendication 4 ou 5, **caractérisé en ce que** la couche intermédiaire **(7)** est constituée par une épaisseur de mousse au moins en partie à cellules fermées.

9. Complexe fibreux **(1)** selon la revendication 8, **caractérisé en ce que** la mousse est choisie parmi les matières suivantes : polyuréthanne, polypropylène, polyéthylène.

10. Complexe fibreux **(1)** selon la revendication 4 ou 5, **caractérisé en ce que** la couche intermédiaire **(7)** est constituée par un produit adhésif.

11. Complexe fibreux **(1)** selon la revendication 10, **caractérisé en ce que** le produit adhésif est déposé sous la forme d'un film.

12. Complexe fibreux **(1)** selon la revendication 9, **caractérisé en ce que** le produit adhésif se présente sous la forme d'une pellicule obtenue par fusion d'une matière pulvérulente déposée sur la face de la nappe et/ou du revêtement décoratif.

13. Complexe fibreux **(1)** selon la revendication 4 ou 5, **caractérisé en ce que** la couche intermédiaire **(7)** est constituée par une association épaisseur de mousse / non tissé.

14. Pièce composite moulée composée au moins pour partie d'un complexe fibreux **(1)** selon l'une des revendications 1 à 13, allié à une matrice de résine thermodurcissable injectée au moins en partie dans la nappe **(3)** et confinée dans sa migration avant polymérisation par l'ensemble à fonctions de barrière et de décoration.

15. Pièce composite selon la revendication 14, **caractérisée en ce qu'**elle est plane.

16. Pièce composite selon la revendication 14, **caractérisée en ce qu'**elle est en forme.

## Claims

1. Fibrous complex **(1)** with a decorated face for making cast composite parts, based on injected thermosetting resin, of the type comprising at least one layer of fibers **(3),**
**characterized in that** it also comprises an assembly related to at least one of the faces of the layer **(3),** and performing a first decor function and a second barrier function to oppose migration of the injected thermosetting resin, in the layer-assembly direction.

2. Fibrous complex **(1)** according to claim 1, **characterized in that** the assembly is a single-layer assembly.

3. Fibrous complex **(1)** according to claim 1, **characterized in that** the assembly is a dual-layer assembly.

4. Fibrous complex **(1)** according to claim 3, **characterized in that** the dual-layer assembly comprises a decorative coating **(6)** and an intermediate layer **(7)** bonded to the coating and the layer and performing at least a barrier function in the layer-coating direction.

5. Fibrous complex **(1)** according to claim 4, **characterized in that** the intermediate layer **(7)** performs a function for smoothing the surface condition of the layer.

6. Fibrous complex **(1)** according to claim 1, **characterized in that** the decorative coating **(6)** is selected from among the following products: continuous thermoplastic material fibers, layer of fibers at least partly bonded, textile, non-woven material, knit, coated support, extruded film.

7. Fibrous complex **(1)** as claimed in claim 4 or 5, **characterized in that** the intermediate layer **(7)** is composed of a non-woven material the porosity of which is selected as a function of the nature and viscosity of the resin when injected.

8. Fibrous complex **(1)** as claimed in claim 4 or 5, **characterized in that** the intermediate layer **(7)** is composed of a thickness of foam at least partly composed of closed cells.

9. Fibrous complex **(1)** as claimed in claim 8, **characterized in that** the foam is chosen from among polyurethane, polypropylene, polyethylene.

10. Fibrous complex **(1)** as claimed in claim 4 or 5, **characterized in that** the intermediate layer **(7)** is composed of an adhesive product.

11. Fibrous complex **(1)** as claimed in claim 10, **characterized in that** the adhesive product is deposited in the form of a film.

12. Fibrous complex **(1)** as claimed in claim 9, **characterized in that** the adhesive product is in the form of a film obtained by melting of a powder product deposited on the face of the layer and/or the decorative coating.

13. Fibrous complex **(1)** as claimed in claim 4 or 5, **characterized in that** the intermediate layer **(7)** is composed of a thickness of a foam / non-woven material combination.

14. Cast composite part at least partly composed of a fibrous complex **(1)** as claimed in any of the claims 1 to 13, combined with a thermoplastic resin matrix at least partly injected in the layer **(3)** and the migration of which is confined before polymerization by the assembly performing barrier and decorative functions.

15. Composite part according to claim 14, **characterized in that** it is flat.

16. Composite part according to claim 14, **characterized in that** it is shaped.

## Patentansprüche

1. Faserkomplex (1) mit dekorierter Seite zum Herstellen geformter Verbundwerkstoffteile auf der Grundlage wärmehärtbaren Spritzgul3harzes des Typs, der mindestens eine Bahn auf Faserbasis (3) aufweist,
**dadurch gekennzeichnet, daß** er ferner in Zusammenhang mit einer der Seiten der Bahn (3) eine Einheit aufweist, die mit der Seite verbunden ist und eine erste Dekorationsfunktion und eine zweite Barrierenfunktion, die dazu bestimmt ist, sich der Migration des wärmehärtbaren Spritzgußharzes in der Richtung Bahn-Einheit zu widersetzen, erfüllt.

2. Faserkomplex (1) nach Anspruch 1, **dadurch gekennzeichnet, daß** die Einheit einschichtig ist.

3. Faserkomplex (1) nach Anspruch 1, **dadurch gekennzeichnet, daß** die Einheit zweischichtig ist.

4. Faserkomplex (1) nach Anspruch 3, **dadurch gekennzeichnet, daß** die zweischichtige Einheit eine Dekorationsbeschichtung (6) und eine Zwischenschicht (7), die mit der Beschichtung und der Bahn verbunden ist und mindestens eine Barrierenfunktion in die Richtung Bahn-Beschichtung erfüllt, aufweist.

5. Faserkomplex (1) nach Anspruch 4, **dadurch gekennzeichnet, daß** die Zwischenschicht (7) eine Glättfunktion des Oberflächenzustands der Bahn erfüllt.

6. Faserkomplex (1) nach Anspruch 1, **dadurch gekennzeichnet, daß** die Dekorationsbeschichtung (6) aus den folgenden Produkten ausgewählt ist: kontinuierliche Fasern aus Thermoplastmaterial, Bahn aus Fasern, die mindestens zum Teil gebunden sind, Textil, Vlies, Gestrick, überzogener Träger, extrudierte Folie.

7. Faserkomplex (1) nach Anspruch 4 oder 5, **dadurch gekennzeichnet, daß** die Zwischenschicht (7) aus einem Vlies besteht, dessen Porosität in Abhängigkeit von der Beschaffenheit und der Viskosität des Harzes im Einspritzzustand ausgewählt ist.

8. Faserkomplex (1) nach Anspruch 4 oder 5, **dadurch gekennzeichnet, daß** die Zwischenschicht (7) aus einer Lage Schaumstoff mindestens zum Teil aus geschlossenen Zellen besteht.

9. Faserkomplex (1) nach Anspruch 8, **dadurch gekennzeichnet, daß** der Schaumstoff aus den folgenden Materialien ausgewählt ist: Polyurethan, Polypropylen, Polyethylen.

10. Faserkomplex (1) nach Anspruch 4 oder 5, **dadurch gekennzeichnet, daß** die Zwischenschicht (7) aus einem klebenden Produkt besteht.

11. Faserkomplex (1) nach Anspruch 10, **dadurch gekennzeichnet, daß** das klebende Produkt in Form einer Folie aufgebracht ist.

12. Faserkomplex (1) nach Anspruch 9, **dadurch gekennzeichnet, daß** das klebende Produkt die Form einer Haut aufweist, die durch Schmelzen eines pulverförmigen Materials, das auf der Seite der Bahn und/oder der Dekorationsbeschichtung abgelagert wird, erzielt wird.

13. Faserkomplex (1) nach Anspruch 4 oder 5, **dadurch gekennzeichnet, daß** die Zwischenschicht (7) aus einer Verbindung SchaumstofflageNlies besteht.

14. Geformter Verbundwerkstoffteil, der mindestens teilweise aus einem Faserkomplex (1) nach einem der Ansprüche 1 bis 13 besteht, verbunden mit einer wärmehärtbaren Harzmatrix, die mindestens zum Teil in die Bahn (3) eingespritzt und in ihrer Migration vor der Polymerisation durch die Einheit mit Barrierefunktion und Dekorationsfunktion eingeschränkt ist.

15. Verbundwerkstoffteil nach Anspruch 14, **dadurch gekennzeichnet, daß** er eben ist.

16. Verbundwerkstoffteil nach Anspruch 14, **dadurch gekennzeichnet, daß** er geformt ist.
